# EUROPÄISCHE PATENTSCHRIFT

(11) **EP 4 496 983 B1**
(45) Veröffentlichungstag und Bekanntmachung des Hinweises auf die Patenterteilung: **25.03.2026**
(21) Anmeldenummer: 22839744.4
(22) Anmeldetag: 16.12.2022
(51) Int. Cl.: G01C 21/36

(54) **VERFAHREN ZUR ERMITTLUNG EINER NAVIGATIONSROUTE FÜR EINEN AUTOMATISIERTEN FAHRBETRIEB EINES FAHRZEUGS**
METHOD FOR DETERMINING A NAVIGATION ROUTE FOR AN AUTOMATED DRIVING OPERATION OF A VEHICLE
PROCÉDÉ DE DÉTERMINATION D'UN ITINÉRAIRE DE NAVIGATION POUR UNE OPÉRATION DE CONDUITE AUTOMATISÉE D'UN VÉHICULE

(30) Priorität: 25.03.2022 DE 102022001030
(43) Veröffentlichungstag der Anmeldung: 29.01.2025
(73) Patentinhaber: Mercedes-Benz Group AG, 70372 Stuttgart (DE)
(72) Erfinder: KEPPLER, Martin, 75394 Oberreichenbach (DE); MAHLER, Tobias, 75395 Ostelsheim (DE)
(74) Vertreter: Novagraaf Group
(86) Internationale Anmeldenummer: PCT/EP2022/086422
(87) Internationale Veröffentlichungsnummer: WO 2023/179903

(56) Entgegenhaltungen:
- EP-A1- 3 617 649
- WO-A1-2020/214596
- US-A1- 2022 065 644

## Beschreibung

Die Erfindung betrifft ein Verfahren zur Ermittlung einer Navigationsroute für einen automatisierten Fahrbetrieb eines Fahrzeugs.

Aus dem Stand der Technik ist es allgemein bekannt, einem Navigationssystem eines zur Durchführung eines automatisierten Fahrbetriebs fähigen Fahrzeugs ein Fahrtziel vorzugeben. Das Navigationssystem ermittelt eine Navigationsroute zum vorgegebenen Fahrtziel. Wenn es möglich ist, fährt das Fahrzeug entlang der ermittelten Navigationsroute zumindest abschnittsweise im automatisierten Fahrbetrieb.

In der US 10,969,232 B1 wird eine Ausrichtung von aus unterschiedlichen Quellen stammenden Straßenkarten mit Standardauflösung (SD-Straßenkarte) und hoher Auflösung (HD-Straßenkarte) beschrieben. Als Reaktion auf die Eingabe eines Ziels wird eine Route zu diesem Ziel definiert und SD-Straßenkarten-Wegpunkte aus dieser definierten Route werden erzeugt. Aus der HD-Straßenkarte wird ein Graph erzeugt. Die Wegpunkte werden mit Knoten und Kanten im Graphen abgeglichen. Eine oder mehrere Kanten bilden ein Segment in der HD-Straßenkarte. Mehrere Segmente werden identifiziert, um der Route zu entsprechen.

In der DE 102021006166.7 wird ein Verfahren zum Datentransfer zwischen zwei digitalen Straßenkarten beschrieben. Der Datentransfer wird zwischen einer digitalen sensorbasierten Straßenkarte und einer digitalen attributbasierten Straßenkarte durchgeführt, wobei eine Segmentierung der sensorbasierten Straßenkarte in Kreuzungen und Streckenabschnitte durchgeführt wird, Attribute des automatisierten Fahrens den Streckenabschnitten zugeordnet werden, Attribute des automatisierten Fahrens Kreuzungssegmenten zugeordnet werden und geprüft wird, ob ein Attributwert für einen automatisierten Übergang in einem Kreuzungsbereich mit Abbiegeverboten in der attributbasierten Straßenkarte in Übereinstimmung bringbar ist.

Aus der US 2022/0 032 907 A1 ist eine Vorrichtung und ein Verfahren zur Verwaltung eines auf einer Straße entlang einer Route fahrenden Fahrzeugs bekannt, bei dem eine Umgebung der vom Fahrzeug befahrenen Straße mittels eines in der Umgebung angeordneten Sensors erfasst wird und bei dem Karteninformationen über die befahrene Straße erfasst werden, wobei basierend auf der erfassten Umgebung und der erfassten Karteninformationen Informationen über eine Fahrgeschwindigkeit des Fahrzeugs auf der Route oder über die Passierbarkeit der Route ermittelt werden und an das Fahrzeug übertragen werden.

Aus der US 2020/0 200 547 A1 ist ein Verfahren zur Generierung von befahrbaren Grenzen einer Straße bekannt, welche in einer hochauflösenden dreidimensionalen Karte als dreidimensionale Darstellung hinterlegt ist. Bei dem Verfahren wird eine zweidimensionale Projektion der Straße erstellt wird, wobei die Projektion eine Vielzahl von Punkten entlang der Straße umfasst. Jeder dieser Punkte wird hinsichtlich seiner Befahrbarkeit bewertet und basierend hierauf werden in der Projektion der Straße eine befahrbare Fläche und deren Grenzen ermittelt. Die ermittelte befahrbare Fläche und deren Grenzen werden sodann in eine dreidimensionale Darstellung umgewandelt und zur Aktualisierung der dreidimensionalen Karte herangezogen.

Aus der US 2022/0065644 A1 ist ein Fahrzeugrouting unter Verwendung einer Analyseplattform für vernetzte Daten bekannt. Ein System bestimmt mehrere Routen zwischen einem Quellort und einem Zielort. Jede der Routen wird durch das System in mehrere Straßenabschnitte unterteilt. Das System bestimmt für jedes Straßensegment ein erstes Sichtfeld. Des Weiteren empfängt das System Fahrzeugsensorkonfigurationsinformationen für Fahrzeugsensoren an Bord eines Fahrzeugs. Das System bestimmt ein zweites Sichtfeld für die Fahrzeugsensoren. Das System wählt eine Route für das Fahrzeug aus, die auf einem Vergleich des zweiten Sichtfelds mit dem ersten Sichtfeld für mehrere Straßenabschnitte basiert.

Aus der WO 2020/214596 A1 sind Systeme und Verfahren zur Erzeugung zusammengesetzter Routingkarten bekannt. Ein Verfahren umfasst ein Identifizieren eines ersten Knotens und eines Quellknotens auf einer ersten Karte, ein Bestimmen eines Kandidatenquellknotens auf einer zweiten Karte, der dem Quellknoten auf der ersten Karte entspricht, ein Bestimmen einer Vielzahl von Kandidatenknoten auf der zweiten Karte, die möglicherweise dem ersten Knoten entsprechen, und ein Auswählen eines jeweiligen Kandidatenknotens aus der Vielzahl von Kandidatenknoten basierend auf einer Ähnlichkeit einer Routendistanz zwischen dem jeweiligen Kandidatenknoten und dem Kandidatenquellknoten auf der zweiten Karte und dem ersten Knoten und dem Quellknoten auf der ersten Karte. Das Verfahren umfasst zudem das Verbinden des ausgewählten jeweiligen Kandidatenknotens und des ersten Knotens und das Kombinieren der ersten Karte und der zweiten Karte zu einer zusammengesetzten Karte.

Aus der EP 3 617 649 A1 sind ein Verfahren, eine Vorrichtung und ein Computergerät zur hochpräzisen Kartenerstellung bekannt. Das Verfahren umfasst ein Erhalten einer lokalen hochpräzisen Karte in einem autonomen Fahrzeug und eines Ziels des autonomen Fahrzeugs, ein Bestimmen, ob es eine hochpräzise Karte gibt, die einem vorderen Straßenabschnitt gemäß dem Ziel und der lokalen hochpräzisen Karte entspricht, und, wenn es keine hochpräzise Karte gibt, die dem vorderen Straßenabschnitt entspricht, ein Auffordern des Fahrers, in einen manuellen Fahrmodus zu wechseln, und, nachdem das autonome Fahrzeug in den vorderen Straßenabschnitt einfährt, ein Sammeln von Karteninformationen durch ein Radar und eine Kamera des autonomen Fahrzeugs und ein Generieren der hochpräzisen Karte gemäß den Karteninformationen.

Der Erfindung liegt die Aufgabe zu Grunde, ein gegenüber dem Stand der Technik verbessertes Verfahren zur Ermittlung einer Navigationsroute für einen automatisierten Fahrbetrieb eines Fahrzeugs anzugeben.

Die Aufgabe wird erfindungsgemäß gelöst durch ein Verfahren zur Ermittlung einer Navigationsroute für einen automatisierten Fahrbetrieb eines Fahrzeugs mit den Merkmalen des Anspruchs 1.

Vorteilhafte Ausgestaltungen der Erfindung sind Gegenstand der Unteransprüche.

In einem erfindungsgemäßen Verfahren zur Ermittlung einer Navigationsroute für einen automatisierten Fahrbetrieb eines Fahrzeugs ist vorgesehen, dass die Navigationsroute für den automatisierten, insbesondere hochautomatisierten oder autonomen, Fahrbetrieb spurgenau ermittelt wird. Dies wird auf die folgende Weise durchgeführt:
Basierend auf einer digitalen attributbasierten Straßenkarte wird eine Knotenliste erstellt, die geographische Koordinatenpunkte einer von einem Navigationssystem ermittelten Route repräsentieren. Die Knotenliste wird in eine digitale sensorbasierte Straßenkarte übertragen, die eine sensorisch erfasste Umgebungsbeschreibung enthält und in der Vergangenheit aufgezeichnete fahrspurgenaue Fahrpfadsegmente sowie ein Abbild der vorgefundenen Umgebung aus Sicht kumulierter Sensordaten mehrerer verschiedener Fahrzeuge beschreibt. Anhand der Knotenliste werden fahrspurgenaue Fahrabschnittskandidaten in der digitalen sensorbasierten Straßenkarte ermittelt. Nicht relevante Fahrabschnittskandidaten werden identifiziert und eliminiert. Die Route wird in Teilgraphen mit nur einer möglichen Fahrspur und Teilgraphen mit mehreren möglichen Fahrspuren segmentiert. In Teilgraphen mit nur einer möglichen Fahrspur existiert auf nur einer Fahrspur ein relevanter fahrspurgenauer Fahrabschnittskandidat. In Teilgraphen mit mehreren möglichen Fahrspuren existieren auf mehreren Fahrspuren relevante fahrspurgenaue Fahrabschnittskandidaten. Optimale Fahrspuren werden identifiziert. In den Teilgraphen mit nur einer möglichen Fahrspur wird diese Fahrspur als optimale Fahrspur identifiziert. In den Teilgraphen mit mehreren möglichen Fahrspuren wird eine der Fahrspuren als optimale Fahrspur ausgewählt. Die optimalen Fahrspuren werden zu der gesuchten spurgenauen Navigationsroute zusammengesetzt.

Durch das erfindungsgemäße Verfahren wird aus der vom Navigationssystem ermittelten Route, die insbesondere kanten- und/oder knotenbasiert ist, ein aus Sicht der digitalen sensorbasierten Straßenkarte optimaler spurgenauer, d. h. fahrspurdefinierter, möglichst gut automatisiert befahrbarer Fahrpfad in Form der spurgenauen Navigationsroute ermittelt, dem das Fahrzeug im automatisierten Fahrbetrieb in optimaler Weise folgen kann. Dabei entspricht dieser Fahrpfad, d. h. die spurgenaue Navigationsroute, in der digitalen sensorbasierten Straßenkarte bestmöglich dem Fahrpfad, d. h. der Route, aus der digitalen attributbasierten Straßenkarte. Unter Verwendung dieses Fahrpfades, d. h. der spurgenauen Navigationsroute, kann dann das Fahrzeug, zumindest entlang der automatisiert befahrbaren Fahranteile der Navigationsroute, d. h. entlang Abschnitten der Navigationsroute, für die fahrspurgenaue Fahrabschnittskandidaten ermittelt werden konnten, automatisiert fahren, eine Übergabe einer Fahrzeugführung an einen Fahrzeugführer bzw. eine Übernahme der Fahrzeugführung vom Fahrzeugführer rechtzeitig einleiten und für nicht automatisiert befahrbare Fahranteile der Navigationsroute, d. h. für Abschnitte der Navigationsroute, für die keine fahrspurgenauen Fahrabschnittskandidaten ermittelt werden konnten, ein manuelles Fahren, insbesondere nach Fahrempfehlungen des Navigationssystems, ermöglichen.

In einer möglichen Ausführungsform werden Abschnitte der Navigationsroute, für die keine fahrspurgenauen Fahrabschnittskandidaten ermittelt werden konnten, für den automatisierten Fahrbetrieb gesperrt. In einer möglichen Ausführungsform werden Abschnitte der Navigationsroute, für die fahrspurgenaue Fahrabschnittskandidaten ermittelt werden konnten, für den automatisierten Fahrbetrieb freigegeben. In einer möglichen Ausführungsform wird der hochautomatisierte oder autonome Fahrbetrieb nur auf freigegebenen Abschnitten zugelassen. Auf diese Weise wird sichergestellt, dass der automatisierte, insbesondere hochautomatisierte oder autonome, Fahrbetrieb nur auf den dafür geeigneten Abschnitten der Navigationsroute durchgeführt wird.

In einer möglichen Ausführungsform wird im hochautomatisierten oder autonomen Fahrbetrieb vor Erreichen eines gesperrten Abschnitts eine Übernahmeaufforderung an einen Fahrzeugführer des Fahrzeugs ausgegeben. Dadurch kann der Fahrzeugführer rechtzeitig die Fahrzeugführung übernehmen, wodurch ein unterbrechungsfreier Fahrbetrieb ermöglicht wird und unsichere Situationen vermieden werden.
In einer möglichen Ausführungsform wird, wenn die gefundene spurgenaue Navigationsroute einen oder mehrere für den automatisierten Fahrbetrieb gesperrte Abschnitte enthält, eine alternative spurgenaue Navigationsroute ohne für den automatisierten Fahrbetrieb gesperrte Abschnitte oder mit weniger für den automatisierten Fahrbetrieb gesperrten Abschnitten gesucht. Dadurch wird erreicht, dass die Navigationsroute gefunden wird, die keine oder zumindest die wenigsten für den automatisierten Fahrbetrieb gesperrten Abschnitte aufweist, so dass vom Start bis zum Ziel oder zumindest eine möglichst große Wegstrecke im automatisierten Fahrbetrieb gefahren werden kann.

In einer möglichen Ausführungsform werden für die Teilgraphen mit mehreren möglichen Fahrspuren die optimalen Fahrspuren mittels einer Kostenfunktion identifiziert. Insbesondere werden hierbei den Fahrspuren des jeweiligen Teilgraphen mit mehreren möglichen Fahrspuren jeweils Kosten zugeordnet, deren Höhe sich insbesondere nach der Eignung der jeweiligen Fahrspur für den automatisierten Fahrbetrieb richtet, insbesondere auch nach dem Grad des automatisierten Fahrbetriebs, d. h. insbesondere nach der SAE-Stufe (SAE-Level), d. h. nach der Automatisierungsstufe des Fahrbetriebs. Je geringer die SAE-Stufe ist, desto größer sind die zugewiesenen Kosten. Alternativ oder zusätzlich können auch erforderliche Spurwechsel in diese Bewertung einfließen. Die optimalen Fahrspuren werden somit durch Minimierung dieser Kosten identifiziert. Alternativ zu dieser Kostenfunktion ist auch die gegensätzliche Vorgehensweise möglich, also die Identifizierung der optimalen Fahrspuren mittels einer Bonusfunktion. Hierbei erfolgt die Zuordnung der Boni in umgekehrter Weise zur Zuordnung der Kosten. Im Beispiel der SAE-Stufe würde dann gelten, je höher die SAE-Stufe ist, desto größer ist der zugewiesene Bonus. Alternativ oder zusätzlich können auch hier erforderliche Spurwechsel in diese Bewertung einfließen. Die optimalen Fahrspuren werden dann durch Maximierung des Bonus identifiziert.

Die Bewertung mit Kosten oder Boni kann beispielsweise gewichtet erfolgen. Alternativ kann beispielsweise ein Machine-Learning anhand von Trainingsdaten durchgeführt werden, welches dann die Bewertung vornimmt, beispielsweise mittels eines Neuronalen Netzes.

In einer möglichen Ausführungsform wird in Abhängigkeit der spurgenauen Navigationsroute eine Spurwechselempfehlung zur Durchführung eines automatisierten oder manuellen Spurwechsels zum Folgen der spurgenauen Navigationsroute erstellt.

Die Spurwechselempfehlung zur Durchführung des automatisierten Spurwechsels wird vorzugsweise im hochautomatisierten oder autonomen Fahrbetrieb erstellt und an eine Vorrichtung zur Durchführung des hochautomatisierten oder autonomen Fahrbetriebs ausgegeben.

Die Spurwechselempfehlung zur Durchführung eines manuellen Spurwechsels wird insbesondere bei einem Fahrzeug, das nicht zur Durchführung von automatisierten Spurwechseln ausgelegt ist, erstellt und an einen Fahrzeugführer des Fahrzeugs ausgegeben. Die Ausgabe an den Fahrzeugführer kann dabei im hochautomatisierten oder autonomen Fahrbetrieb oder in einem manuellen Fahrbetrieb erfolgen. Die Ausgabe im manuellen Fahrbetrieb ist vorteilhaft, weil der Fahrzeugführer dann in Vorbereitung auf einen folgenden hochautomatisierten oder autonomen Fahrbetrieb auf die optimale Fahrspur der spurgenauen Navigationsroute geleitet wird.

Mit dem Verfahren wird das Fahrerlebnis einer hochautomatisierten oder autonomen Fahrt verbessert, indem Spurwechsel auf optimale Fahrspuren im Voraus geplant werden und automatisiert durchgeführt werden oder dem Fahrzeugführer empfohlen werden, wodurch unerwartete Unterbrechungen des hochautomatisierten oder autonomen Fahrbetriebs aufgrund von vorausliegenden Fahrspurabschnitten, die für diesen Fahrbetrieb ungeeignet sind, weitgehend vermieden werden.
Die für das Verfahren zur Ermittlung der Navigationsroute für den automatisierten Fahrbetrieb des Fahrzeugs genannten Merkmale können, einzeln oder in Kombination miteinander, auch Bestandteil eines Verfahrens zur Durchführung eines Fahrbetriebs des Fahrzeugs sein, insbesondere zur Durchführung eines automatisierten, insbesondere hochautomatisierten oder autonomen, Fahrbetriebs des Fahrzeugs.

Ausführungsbeispiele der Erfindung werden im Folgenden anhand von Zeichnungen näher erläutert.

Dabei zeigen:
- Fig. 1: schematisch eine digitale sensorbasierte Straßenkarte,
- Fig. 2: schematisch eine digitale attributbasierte Straßenkarte,
- Fig. 3: schematisch die digitale sensorbasierte Straßenkarte aus Figur 1 mit aus der digitale attributbasierte Straßenkarte gemäß Figur 2 übertragenen geographischen Koordinatenpunkten,
- Fig. 4: schematisch die digitale sensorbasierte Straßenkarte aus Figur 1 mit möglichen Fahrtrajektorien, die aus ermittelten relevanten Fahrabschnittskandidaten resultieren, und
- Fig. 5: schematisch eine Segmentierung in Teilgraphen und Ermittlung einer spurgenauen Navigationsroute.

Einander entsprechende Teile sind in allen Figuren mit den gleichen Bezugszeichen versehen.

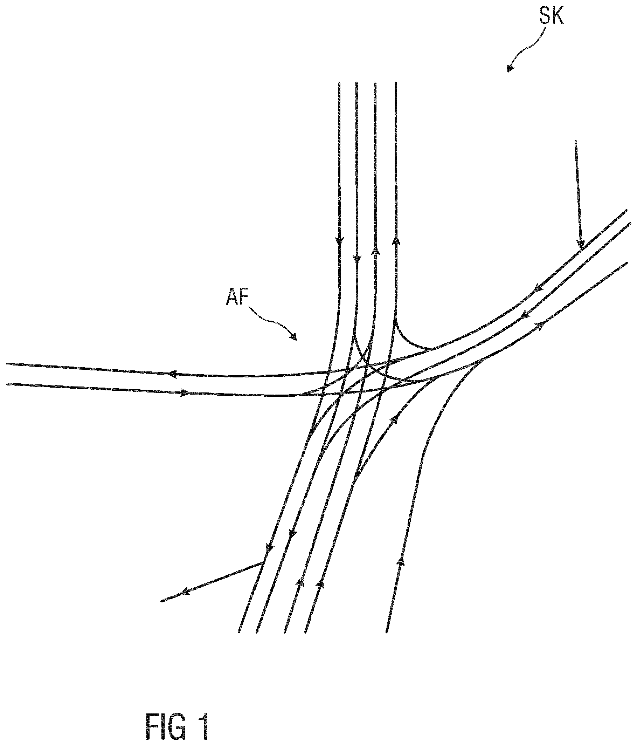

Anhand der Figuren 1 bis 5 wird im Folgenden ein Verfahren zur spurgenauen Ermittlung einer Navigationsroute für einen automatisierten, insbesondere hochautomatisierten oder autonomen, Fahrbetrieb eines Fahrzeugs beschrieben.

Im Stand der Technik erfolgt eine Weiterentwicklung des automatisierten Fahrens insbesondere mittels datengetriebener Ansätze. Dabei werden Fahrzeuge mit umfangreichen Sensoren ausgestattet, die eine Fahrzeugumgebung in verschiedenen Aspekten untersuchen und dabei Umgebungsdaten liefern. Als Sensortechnologien werden dabei beispielsweise Radar, Lidar, Kamera und/oder Ultraschall und/oder weitere zur Umgebungserfassung geeignete Sensortechnologien verwendet. Mittels dieser Umgebungsdaten wird, insbesondere unter Verwendung von Machine-Learning-Methoden, ein Modell der Umwelt erstellt. Darin wird das automatisiert zu fahrende Fahrzeug eingebracht, es werden Hypothesen durch Projektionen von Bewegungen in die Zukunft erstellt und daraus dann Handlungsmöglichkeiten zur automatisierten Fahrzeugsteuerung ermittelt und ausgeführt.

Zur Plausibilisierung einer Positionsschätzung des automatisiert zu fahrenden Fahrzeugs, zur Plausibilisierung der Modellierung und letztendlich auch zur Plausibilisierung der Handlungsmöglichkeiten ist es aus Sicherheitsgründen Stand der Technik, sich nicht nur auf die aktuellen eigenen Sensordaten des Fahrzeugs zu verlassen, sondern zusätzlich noch Sensordaten der Vergangenheit heranzuziehen.

Diese Sensordaten von Fahrten der Vergangenheit idealerweise mehrerer verschiedener Fahrzeuge werden insbesondere mittels Machine-Learning-Methoden abstrahiert und kumuliert in einer digitalen sensorbasierten Straßenkarte SK, wie beispielhaft in Figur 1 gezeigt. Diese sensorbasierte Straßenkarte SK beschreibt in der Vergangenheit aufgezeichnete fahrspurgenaue Fahrpfadsegmente sowie ein Abbild der vorgefundenen Umgebung aus Sicht der kumulierten Sensordaten. Es handelt sich hierbei somit um eine von Fahrzeugen mittels der Sensorik gelernte sensorbasierte Straßenkarte SK.

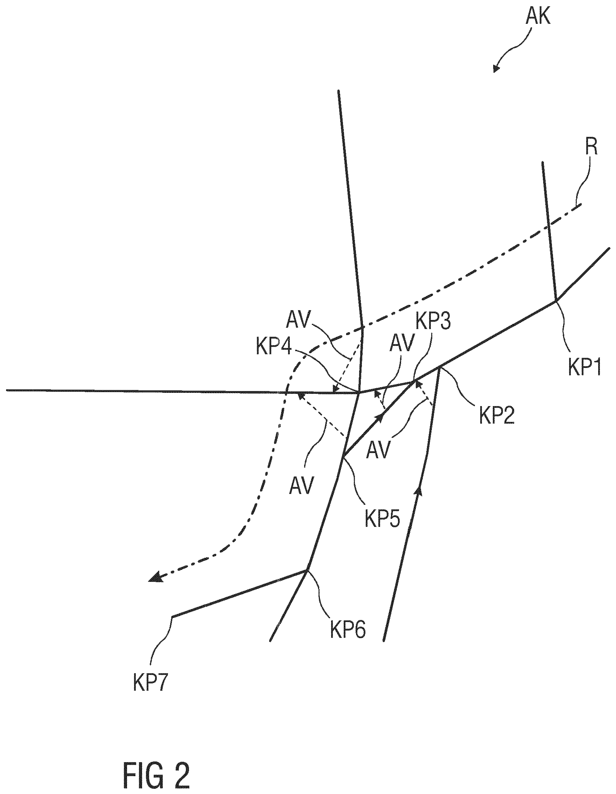

Ein Navigationssystem hingegen benötigt eine digitale attributbasierte Straßenkarte AK, beispielhaft in Figur 2 gezeigt. Diese attributbasierte Straßenkarte AK dient einem völlig anderen Zweck als die sensorbasierte Straßenkarte SK. Die attributbasierte Straßenkarte AK wird primär zur Routenberechnung von einer aktuellen Position des Fahrzeugs bis zu einem vorgegebenen Ziel verwendet. Die attributbasierte Straßenkarte AK hat deshalb auch fundamental andere Eigenschaften als die sensorbasierte Straßenkarte SK.

Die attributbasierte Straßenkarte AK ist erheblich abstrahierter, sonst wäre auf einem im Fahrzeug eingebetteten Navigationssystem keine leistungsfähige Routenberechnung möglich. Zudem besteht die attributbasierte Straßenkarte AK mindestens aus Kanten, auch als Edge, Link oder Straßensegment bezeichnet, Knoten, auch als Node oder als Verbindung zwischen Links oder als Kreuzung bezeichnet, und Relationen. Relationen sind Beziehungen und Bedingungen zwischen Kanten, beispielsweise Abbiegeverbote AV.

Die attributbasierte Straßenkarte AK weist viele Attribute auf, die nicht oder nur schwer automatisiert mittels Sensoren erfasst werden können. Beispiele hierfür sind Straßennamen, Straßenklassen, Sonderziele, Hausnummern oder auch bestimmte Restriktionen an komplexen Kreuzungen, beispielsweise fahrzeugbasierte und/oder zeitbasierte Abbiegeverbote AV.

Insbesondere unterscheiden sich die attributbasierte Straßenkarte AK und die sensorbasierte Straßenkarte SK in drei im Folgenden beschriebenen zentralen Punkten:
Die attributbasierte Straßenkarte AK beschreibt ein Straßennetz entsprechend einem vordefinierten Regelwerk, das dafür optimiert ist, Navigationsfunktionen effizient zu ermöglichen. Im Gegensatz dazu beschreibt die sensorbasierte Straßenkarte SK eine Umgebung in der Art und Weise, wie sie von Sensoren beobachtet und vermessen wird.

Die attributbasierte Straßenkarte AK beschreibt die Geometrie auf Straßenebene, d. h. eine kantenbasierte Geometrie, wie in Figur 2 gezeigt. Im Gegensatz dazu beschreibt die sensorbasierte Straßenkarte SK die Geometrie auf Fahrspurebene, d. h. eine fahrspurbasierte Geometrie, wie in Figur 1 gezeigt, in welcher die sensorbasierte Straßenkarte SK mit den Fahrspuren dargestellt ist. Insbesondere an komplexen Kreuzungen wird der Unterschied offensichtlich, wie im Vergleich der Figuren 1 und 2 für eine solche komplexe Kreuzung ersichtlich.

Die attributbasierte Straßenkarte AK beschreibt Abbiegeverbote AV. Im Gegensatz dazu modelliert die sensorbasierte Straßenkarte SK Abbiegemöglichkeiten mittels eines Vorhandenseins einer dedizierten Abbiegespur.

In der sensorbasierten Straßenkarte SK gemäß Figur 1 sind alle Abbiege- und Fahrtmöglichkeiten AF auf der Kreuzung dargestellt. In der attributbasierten Straßenkarte AK gemäß Figur 2 sind Abbiegeverbote AV auf der Kreuzung mittels gestrichelter Pfeile dargestellt. Der Unterschied in der Abstraktion ist offensichtlich.

Die sensorbasierte Straßenkarte SK enthält die Informationen für den automatisierten Fahrbetrieb. Die attributbasierte Straßenkarte AK ermöglicht eine Routenberechnung und Zielführung beispielsweise für ein Navigationssystem.

Entsprechend beschreibt DE 102021006166.7, insbesondere anhand der Figuren 1 bis 5 und in der zugehörigen Figurenbeschreibung, ein Matchingverfahren, das die Informationen der sensorbasierten Straßenkarte auf die wesentlich abstrahiertere attributbasierte Straßenkarte abbildbar macht. Die DE 102021006166.7, insbesondere deren Figuren 1 bis 5 und Figurenbeschreibung, werden hiermit durch Referenz aufgenommen.

Das im Folgenden beschriebene Verfahren ermöglicht insbesondere eine zur Durchführung des automatisierten, insbesondere hochautomatisierten oder autonomen, Fahrbetriebs geeignete Abbildung einer mittels eines Navigationssystems anhand der digitalen attributbasierte Straßenkarte AK ermittelten Route R von einem Startpunkt SP zu einem Zielpunkt ZP auf die digitale sensorbasierte Straßenkarte SK, insbesondere in optimierter Weise, um sie dadurch mittels des Fahrzeugs, insbesondere automatisiert, insbesondere hochautomatisiert oder autonom, abfahren zu können.

Ein Gesamtsystem, auf dem diese Abbildung implementiert wird, besteht insbesondere aus einem Fahrzeug mit einer Vorrichtung zur Durchführung des automatisierten, insbesondere hochautomatisierten oder autonomen, Fahrbetriebs basierend auf einer digitalen sensorbasierten Straßenkarte SK und einem Navigationssystem mit einer digitalen attributbasierten Straßenkarte AK. Das Navigationssystem kann dabei im Fahrzeug mit einer lokalen Datenbank implementiert sein oder als eine backendbasierte Online-Lösung, d. h. mit einer Datenverbindung des Fahrzeugs zu einem fahrzeugexternen Server, vorgesehen sein, oder es kann eine Kombination dieser beiden Ausgestaltungen vorgesehen sein.

Im hier beschriebenen Verfahren wird, insbesondere in einem Schritt I, basierend auf der digitalen attributbasierten Straßenkarte AK eine Knotenliste erstellt, die geographische Koordinatenpunkte KP1 bis KP7 der vom Navigationssystem ermittelten Route R repräsentieren. Diese geographischen Koordinatenpunkte KP1 bis KP7 werden auch als Knoten bezeichnet.

Zunächst wird somit im Navigationssystem die Route R berechnet. Diese Route R oder ein gewünschter, insbesondere vorausschauender, Fahrpfad wird vorteilhafterweise an die Vorrichtung zur Durchführung des automatisierten, insbesondere hochautomatisierten oder autonomen, Fahrbetriebs übertragen, um dem Fahrzeug zu ermöglichen, mit einem höchstmöglichen Automatisierungsgrad (SAE-Stufe) der Route R oder dem Fahrpfad zu folgen. Im Folgenden wird das Verfahren anhand der mittels des Navigationssystems ermittelten Route R beschrieben, wobei alternativ anstelle der Route R der Fahrpfad verwendet werden kann.

Insbesondere liegt zunächst die vom Navigationssystem ermittelte Route R, insbesondere innerhalb des Navigationssystems, als gerichtete Liste (Abfolge) von Kanten und/oder von Knoten im Kartengraphen der attributbasierten Straßenkarte AK vor. Die Liste besteht üblicherweise aus alphanumerischen oder numerischen IDs, d. h. Identifizierungscodes (Referenzen) auf die Kanten/Knoten im Kartengraphen. Alle Kanten und/oder Knoten sind vollständig enthalten.

Insbesondere erfolgt in einem Unterschritt I.1 eine Abbildung auf eine Liste, die nur noch Knoten enthält, da ein geometrischer Verlauf der Route R in der vollständigen Knotenliste vollständig und eineindeutig enthalten ist. Dies ist die Information, mit der die Abbildung auf die sensorbasierte Straßenkarte SK erfolgen kann.

Falls eine Routenliste der mittels des Navigationssystems ermittelten Route R aus Kanten und Knoten besteht, ist insbesondere vorgesehen, dass alle Kanten aus der Routenliste entfernt werden. Sie enthält damit dann eine vollständige Liste nur noch der Knoten entlang der Route R.

Falls die Routenliste der mittels des Navigationssystems ermittelten Route R nur aus Kanten besteht, ist insbesondere vorgesehen, dass im Kartengraphen zu jeder Kante der jeweilige Anfangs- und Endknoten gesucht wird. Die vollständige Liste der Kanten wird ersetzt durch die vollständige Liste der Knoten entlang der Route R.

Insbesondere erfolgt in einem Unterschritt I.2 eine Abbildung der Knotenliste auf ein gemeinsames Austauschformat, denn die Referenzierung in der Knotenliste entlang der Route R erfolgt mittels der genannten IDs. Diese IDs sind in der sensorbasierten Straßenkarte SK jedoch nicht bekannt. Daher wird eine Abbildung auf ein gemeinsames beiderseits bekanntes Austauschformat vorgenommen.

Die IDs der vollständigen Liste der Knoten entlang der Route R werden ersetzt durch einen Datensatz eines in beiden Straßenkarten AK, SK gleichermaßen bekannten Austauschformats. Beispielsweise können das Geokoordinaten im Format WGS84 sein, optional auch angereichert mit weiteren Daten, beispielsweise Höheninformationen oder Straßennamen oder Straßennummern.

Des Weiteren wird im hier beschriebenen Verfahren, insbesondere in einem Schritt II, die Knotenliste, insbesondere im gemeinsamen Austauschformat, in die digitale sensorbasierte Straßenkarte SK, die eine sensorisch erfasste Umgebungsbeschreibung enthält, übertragen.

Beispielsweise wird die Knotenliste der Route R im gemeinsamen Austauschformat an eine Recheneinheit übertragen, die Zugriff auf die sensorbasierte Straßenkarte SK hat und die Abbildung, d. h. das Matchen, in die sensorbasierte Straßenkarte SK durchführt.

Die Figur 2 zeigt die vollständige Knotenliste der Route R mit den Knoten, d. h. den geographischen Koordinatenpunkte KP1 bis KP7 in der attributbasierten Straßenkarte AK.

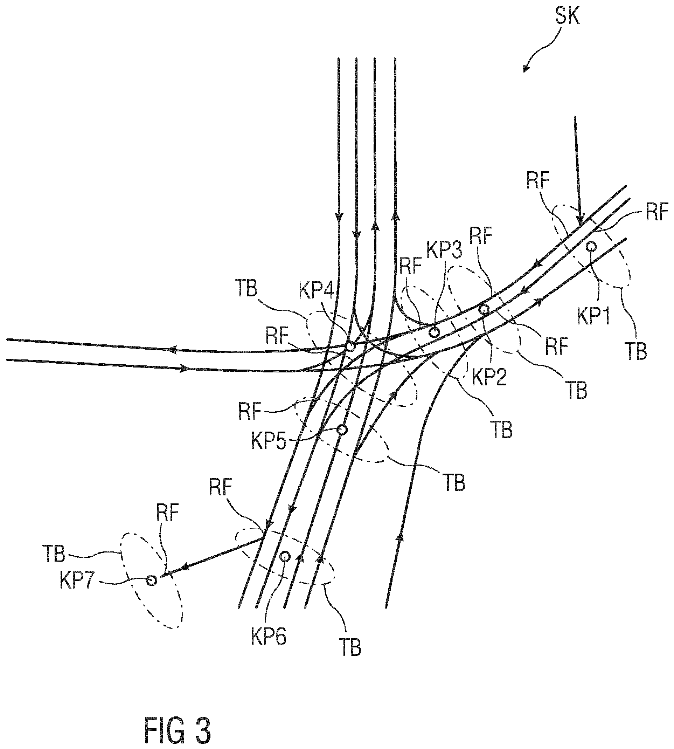

Die Figur 3 zeigt die vollständige Knotenliste der Route R mittels des gemeinsamen Austauschformats abgebildet auf die sensorbasierte Straßenkarte SK. Aufgrund des generalisierten Charakters der attributbasierten Straßenkarte AK weichen die geographischen Koordinatenpunkte KP1 bis KP7 teilweise weit von tatsächlichen fahrspurgenauen Fahrpfaden der sensorbasierten Straßenkarte SK und somit von einer möglichen fahrspurgenauen Navigationsroute NR ab.

Des Weiteren werden im hier beschriebenen Verfahren, insbesondere in einem Schritt III, anhand der Knotenliste fahrspurgenaue Fahrabschnittskandidaten in der digitalen sensorbasierten Straßenkarte SK ermittelt.

Aufgrund der oben beschriebenen und im Vergleich der Figuren 2 und 3 ersichtlichen erheblichen Abweichung in der geometrischen Repräsentation zwischen beiden Straßenkarten AK, SK ist insbesondere vorgesehen, die aus der attributbasierten Straßenkarte AK in die sensorbasierte Straßenkarte SK übernommenen Knoten, d. h. geographischen Koordinatenpunkte KP1 bis KP7, mit einem Toleranzbereich TB zu versehen. Der jeweilige Toleranzbereich TB kann beispielsweise in Querrichtung, d. h. quer zu einer Fahrtrichtung des Fahrzeugs, größer sein als in Fahrtrichtung.

Alle fahrspurgenauen Fahrabschnitte, die sich innerhalb des jeweiligen Toleranzbereichs TB befinden, sind Kandidaten für zu verwendende Fahrabschnitte, d. h. fahrspurgenaue Fahrabschnittskandidaten. Falls für einzelne wenige aufeinanderfolgende Knoten, d. h. geographische Koordinatenpunkte KP1 bis KP7, innerhalb des Toleranzbereichs TB keine fahrspurgenauen Fahrabschnitte in der sensorbasierten Straßenkarte SK vorhanden sind, kann von einer kleinräumigen Abweichung zwischen beiden Straßenkarten AK, SK ausgegangen werden. In diesem Fall können diese einzelnen wenigen Knoten, d. h. geographische Koordinatenpunkte KP1 bis KP7, übersprungen werden. Falls für hinreichend viele aufeinanderfolgende Knoten, d. h. geographische Koordinatenpunkte KP1 bis KP7, innerhalb des Toleranzbereichs TB keine fahrspurgenauen Fahrabschnitte in der sensorbasierten Karte SK vorhanden sind, kann davon ausgegangen werden, dass innerhalb dieses Abschnittes entlang der Knoten, d. h. der geographischen Koordinatenpunkte KP1 bis KP7, kein automatisierter Fahrbetrieb möglich ist. Das weitere Vorgehen für diesen Fall wird dann im Folgenden in Schritt V beschrieben.

Des Weiteren werden im hier beschriebenen Verfahren, insbesondere in einem Schritt IV, nicht relevante, d. h. insbesondere unplausible, Fahrabschnittskandidaten identifiziert und eliminiert, d. h. verworfen. Dadurch verbleiben die relevanten Fahrabschnittskandidaten RF.

Insbesondere erfolgt in einem Unterschritt IV.1 ein Verwerfen, d. h ein Eliminieren, von Fahrabschnittskandidaten, die eine Fahrtrichtung entgegen dem Verlauf der Route R haben. Fahrabschnittskandidaten, die im weiteren Verlauf von der Route R wegführen, insbesondere sie endgültig verlassen, werden verworfen, d. h. eliminiert. Fahrabschnittskandidaten, die von außerhalb, d. h. jenseits der Route R, in die Route R münden, werden verworfen, d. h. eliminiert. Fahrabschnittskandidaten, die nicht Teil der Route R sind, sondern beispielsweise nur in der Nähe vorbeiführen, werden ebenfalls verworfen, d. h. eliminiert.

Insbesondere erfolgt in einem Unterschritt IV.1 eine Eliminierung von toten Pfaden. Fahrabschnittskandidaten, die dem Fahrverlauf, d. h. der Route R, entsprechen, aber im weiteren Verlauf nicht mehr erlauben, der Route R zu folgen, werden rückwirkend soweit eliminiert, bis eine Stelle erreicht wird, die einen Spurwechsel auf einen der Route R weitergehend folgenden alternativen Fahrabschnitt erlaubt. Das ist beispielsweise eine rückwirkend nächste Stelle mit gestrichelter Fahrbahnmarkierung, die somit einen Fahrspurwechsel ermöglicht. Entsprechend umgekehrt, d. h. gespiegelt, wird auch mit Fahrabschnittkandidaten verfahren, die aufgrund der Vorgeschichte zwar parallel verlaufen, aber erst ab einem bestimmten Punkt in Fahrtrichtung durch Fahrspurwechsel erreicht werden können, entlang der Route R. Im dargestellten Beispiel ist nur bis vor den dritten geographischen Koordinatenpunkt KP3 ein Wechsel von der in Fahrtrichtung linken Fahrspur entlang der Route R auf die in Fahrtrichtung rechte Fahrspur entlang der Route R möglich. Ab dem dritten geographischen Koordinatenpunkt KP3 sind somit die Fahrabschnitte der in Fahrtrichtung linken Fahrspur entlang der Route R keine relevanten Fahrabschnittskandidaten RF.

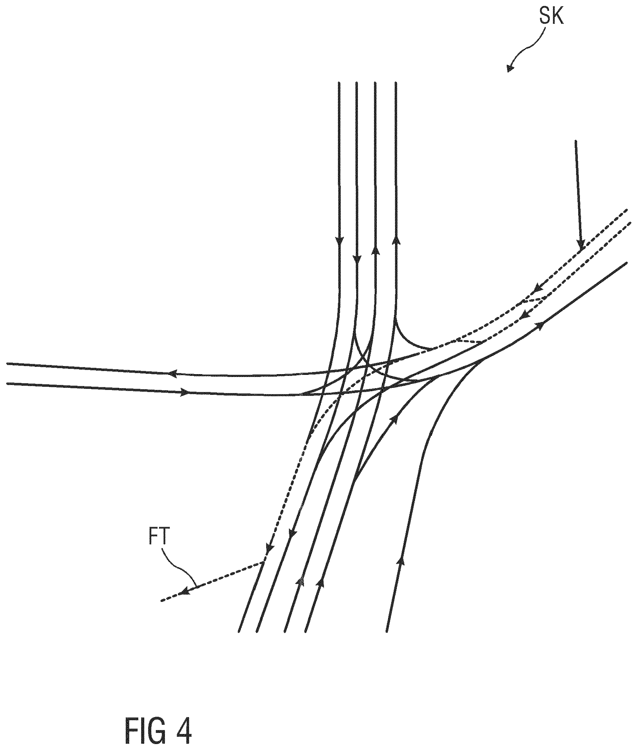

Wie in Figur 4 gezeigt, ermöglichen die verbleibenden relevanten Fahrabschnittskandidaten RF eine Fahrtrajektorie FT oder mehrere Fahrtrajektorien FT für das Fahrzeug, im dargestellten Beispiel, gestrichelt dargestellt, entweder direkt auf der rechten Fahrspur oder zu Beginn auf der linken Fahrspur mit einem Wechsel auf die rechte Fahrspur, solange dies noch zulässig ist.

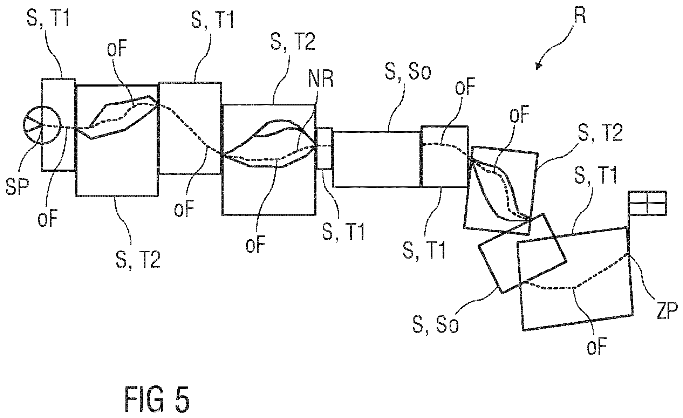

Des Weiteren wird im hier beschriebenen Verfahren, insbesondere in einem Schritt V, die Route R in Teilgraphen T1 mit nur einer möglichen Fahrspur und Teilgraphen T2 mit mehreren möglichen Fahrspuren segmentiert. Dies ist beispielhaft in Figur 5 für die gesamte Route R vom Startpunkt SP bis zum Zielpunkt ZP dargestellt. Die verschiedenen Segmente S sind dabei durch Kästchen markiert.

Wie dargestellt, können dabei auch Segmente So ohne mögliche Teilgraphen vorhanden sein. Die gesuchte spurgenaue Navigationsroute NR für den automatisierten, insbesondere hochautomatisierten oder autonomen, Fahrbetrieb weist in einem solchen Segment So eine Lücke auf. Auf diesem Segment So ist automatisiertes Fahren nicht möglich. Der Abschnitt der Navigationsroute in einem solchen Segment So ohne mögliche Teilgraphen, für den somit keine fahrspurgenauen Fahrabschnittskandidaten ermittelt werden konnten, wird für den automatisierten Fahrbetrieb, beispielsweise SAE-Stufe 3, 4 und 5, gesperrt, d. h. zumindest für das hochautomatisierte und autonome Fahren nicht freigegeben. Bei einem hochautomatisierten oder autonomen Fahrbetrieb muss somit eine Fahrzeugführung vor Erreichen des gesperrten Abschnitts an einen Fahrzeugführer des Fahrzeugs übergeben werden. Es wird somit vor Erreichen des gesperrten Abschnitts eine Übernahmeaufforderung an den Fahrzeugführer des Fahrzeugs ausgegeben.

Im dargestellten Beispiel ist ein vollautomatisierter oder autonomer Fahrbetrieb auf der gesamten Route R nicht möglich, da das Fahrzeug beim vollautomatisierten oder autonomen Fahrbetrieb das Ziel, d. h. den Zielpunkt ZP der Route R, fahrerlos erreichen muss und da das nicht möglich ist, wenn die Fahraufgabe zwischendurch an einen Fahrzeugführer übergeben werden muss. Wenn das Fahrzeug im vollautomatisierten oder autonomen Fahrbetrieb fahren soll, wird die Route R verworfen und es wird nach einer alternativen Route R gesucht, die keine Segmente So ohne mögliche Teilgraphen aufweist.

In dem Verfahrensschritt der Segmentierung, wie oben beschrieben insbesondere Schritt V, wird somit der Graph mit allen möglichen Trajektorien entlang der Route R segmentiert in Teilgraphen T1 mit nur einer möglichen Fahrspur, d. h. hier existiert nur auf einer Fahrspur ein relevanter fahrspurgenauer Fahrabschnittskandidat RF, und Teilgraphen T2 mit mehreren möglichen Fahrspuren, d. h. hier existieren auf mehreren Fahrspuren relevante fahrspurgenaue Fahrabschnittskandidaten RF.

Abschnitte der Route R, die nicht auf die sensorbasierte Straßenkarte SK abgebildet werden können, d. h. auf denen kein automatisierter Fahrbetrieb möglich ist, wie oben unter Schritt III erwähnt, werden separat behandelt. Wie bereits erwähnt, ist hier kein automatisierter Fahrbetrieb möglich, so dass vor Erreichen eine Übergabe an den Fahrzeugführer erfolgt. Nach Beendigung eines solchen Abschnitts kann eine Rückübergabe an das automatisierte Fahren erfolgen, d. h. der automatisierte Fahrbetrieb erneut aktiviert werden. Alternativ kann ein Verfahren zur Durchführung des automatisierten Fahrbetriebs ohne sensorbasierte Straßenkarte SK verwendet werden, das den automatisierten Fahrbetrieb in diesen Segmenten So ohne mögliche Teilgraphen ohne Übergabe an den Fahrzeugführer ermöglicht.

Des Weiteren werden im hier beschriebenen Verfahren, insbesondere in einem Schritt VI, optimale Fahrspuren oF identifiziert. Bei den Teilgraphen T1 mit nur einer möglichen Fahrspur ist diese die optimale Fahrspur oF, da es zur Durchführung des automatisierten Fahrbetriebs keine Alternativen gibt. Das Fahrzeug muss auf dieser Fahrspur gehalten werden. Bei den Teilgraphen T2 mit mehreren möglichen Fahrspuren muss eine davon als optimale Fahrspur oF für die Erstellung der spurgenauen Navigationsroute NR ausgewählt werden. Bei der Auswahl wird beispielsweise berücksichtigt, auf welcher der möglichen Fahrspuren eine Fahrt mit einem möglichst hohen Anteil einer möglichst hohen Automatisierungsstufe, d. h. SAE-Stufe, mit möglichst wenigen Spurwechseln, mit möglichst wenigen und/oder geringen Störungen, die möglichst wenige und/oder geringe Geschwindigkeitsanpassungen erfordern, möglich ist.

Die Auswahl der optimalen Fahrspur oF in den Teilgraphen T2 mit mehreren möglichen Fahrspuren erfolgt somit insbesondere durch eine Betrachtung eines Ergebnisses einer Bewertung, beispielsweise mittels einer Kostenfunktion. Die Fahrspur mit den optimalen, d. h. minimalen, Kosten wird als optimale Fahrspur oF ausgewählt und somit dazu verwendet, das Fahrzeug entlang des Teilgraphen T2 automatisiert fahren zu lassen. Dabei werden beispielsweise auch Fahrspurwechsel entlang der Teilgraphen T2 mitbetrachtet, sofern die entsprechenden Daten der sensorbasierten Straßenkarte SK einen Fahrspurwechsel erlauben. Die Kostenfunktion kann einen oder mehrere oder alle der folgenden Parameter umfassen, die beispielsweise entsprechend ihres Längenanteils entlang der Route R anteilig in die Kostenfunktion eingehen:
- Die Kosten sinken mit steigender Automatisierungsstufe (SAE-Stufe) des automatisierten Fahrens. Die Stufe des automatisierten Fahrens ist ein Attribut der sensorbasierten Straßenkarte SK, einzelne Abschnitte können unterschiedliche Automatisierungsstufen aufweisen.
- Die Kosten sinken mit steigendem Anteil des automatisierten Fahrbetriebs.
- Die Kosten steigen mit der erforderlichen Anzahl der Übergaben zwischen dem Fahrzeugführer und dem automatisierten Fahrbetrieb. Im Umkehrschluss sinken dadurch die Kosten, je länger zusammenhängend die einzelnen Abschnitte des automatisierten Fahrbetriebs sind.
- Die Kosten steigen mit der Anzahl der durchzuführenden Fahrspurwechsel.
- Die Kosten steigen entsprechend vorhandener Verkehrsverzögerungen, beispielsweise ermittelt aus von fahrspurgenauen Verkehrsinformationen.
- Die Kosten sinken entsprechend den, insbesondere mittels einer Sensorik ermittelbaren, tatsächlichen fahrspurgenauen Fahrgeschwindigkeiten.
Die einzelnen Kostenparameter können beispielsweise, insbesondere entsprechend einer Systemauslegung, zueinander gewichtet und in eine gemeinsame Gesamtkostenfunktion überführt werden, die alle Teilparameter entsprechend berücksichtigt.

Alternativ zu diesem Kostenmodell der Bewertung, das nachteilige Kosten summiert und dann insgesamt minimiert, kann auch, in umgekehrter Weise, mit Bonuswerten gerechnet werden, die dann maximiert werden. In den oben genannten Punkten, in denen die Kosten sinken, würden dann die Bonuswerte steigen, und in den oben genannten Punkten, in denen die Kosten steigen, würden dann die Bonuswerte sinken. Auch hier können dann die einzelnen Bonusparameter beispielsweise, insbesondere entsprechend einer Systemauslegung, zueinander gewichtet und in eine gemeinsame Gesamtbonusfunktion überführt werden, die alle Teilparameter entsprechend berücksichtigt. Der Unterschied ist, dass bei der Kostenfunktion die Kosten minimiert und bei der Bonusfunktion die Bonuswerte maximiert werden.

Alternativ zur gewichteten Bewertung der Einzelargumente, insbesondere der oben genannten Parameter, kann beispielsweise ein Machine-Learning anhand von Trainingsdaten durchgeführt werden, das dann die Bewertung beispielsweise mittels eines neuronalen Netzes vornimmt.

Des Weiteren werden im hier beschriebenen Verfahren, insbesondere in einem Schritt VII, die identifizierten optimalen Fahrspuren oF zu der gesuchten spurgenauen Navigationsroute NR zusammengesetzt, d. h. zu einem rekonstruierten automatisiert befahrbaren optimalen Fahrpfad oF in der sensorbasierten Straßenkarte SK. Die spurgenauen Navigationsroute NR ist in Figur 5 gestrichelt dargestellt. Die Fahrspuren der Teilgraphen T1 mit nur einer möglichen Fahrspur, die somit die optimale Fahrspur oF ist, werden mit den Teilgraphen mit der jeweiligen auf die oben beschriebene Weise identifizierten optimalen Fahrspur oF der Teilgraphen T2 mit mehreren möglichen Fahrspuren zusammengesetzt zu einem Gesamtgraphen. Sollte der Gesamtgraph eine Lücke oder mehrere Lücken aufweisen, im dargestellten Beispiel im in Fahrtrichtung sechsten und neunten Segment S, ist dort basierend auf den Daten der sensorbasierten Straßenkarte SK kein automatisierter Fahrbetrieb möglich. Es muss dann eine Übergabe an den Fahrzeugführer erfolgen oder im Navigationssystem eine alternative Route R angefordert werden. D. h. es kann dann vorgesehen sein, dass eine alternative spurgenaue Navigationsroute NR ohne für den automatisierten Fahrbetrieb gesperrte Abschnitte oder mit weniger für den automatisierten Fahrbetrieb gesperrten Abschnitten gesucht wird.

Die da die spurgenaue Navigationsroute NR aus einer Folge von optimalen Fahrspuren oF zusammengesetzt ist, ist es möglich, Spurwechselempfehlungen zu erstellen, die das Fahrzeug beim Folgen der spurgenauen Navigationsroute NR auf die jeweils optimale Fahrspur oF leiten. Die Spurempfehlungen können dabei Steueranweisungen sein, die im automatisierten oder hochautomatisierten Fahrbetrieb an eine Vorrichtung zur Durchführung des automatisierten oder hochautomatisierten Fahrbetriebs ausgegeben werden und die Durchführung des automatisierten Spurwechsels initiieren. Die Spurempfehlungen können aber auch Handlungsanweisungen sein, die an den Fahrzeugführer ausgegeben werden, um diesen zur manuellen Durchführung des Spurwechsels anzuweisen. Dies ist insbesondere bei einem Fahrzeug sinnvoll, das nicht zur Durchführung von automatisierten Spurwechseln ausgelegt ist. Die Ausgabe der Spurwechselempfehlungen an den Fahrer kann dabei im hochautomatisierten oder autonomen Fahrbetrieb erfolgen, sie kann aber auch in einem manuellen Fahrbetrieb erfolgen. Die Ausgabe der Spurwechselempfehlungen im manuellen Fahrbetrieb ist dabei vorteilhaft, weil der Fahrzeugführer dann in Vorbereitung auf einen eventuell folgenden hochautomatisierten oder autonomen Fahrbetrieb von Anfang an auf die optimale Fahrspur oF geleitet wird.

## Patentansprüche

1. Verfahren zur Ermittlung einer Navigationsroute (NR) für einen automatisierten Fahrbetrieb eines Fahrzeugs, wobei die Navigationsroute (NR) für den automatisierten, insbesondere hochautomatisierten oder autonomen, Fahrbetrieb spurgenau ermittelt wird, indem
- basierend auf einer digitalen attributbasierten Straßenkarte (AK) eine Knotenliste erstellt wird, die geographische Koordinatenpunkte (KP1 bis KP7) einer von einem Navigationssystem ermittelten Route (R) repräsentieren,
- die Knotenliste in eine digitale sensorbasierte Straßenkarte (SK) übertragen wird, die eine sensorisch erfasste Umgebungsbeschreibung enthält und in der Vergangenheit aufgezeichnete fahrspurgenaue Fahrpfadsegmente sowie ein Abbild der vorgefundenen Umgebung aus Sicht kumulierter Sensordaten mehrerer verschiedener Fahrzeuge beschreibt,
- anhand der Knotenliste fahrspurgenaue Fahrabschnittskandidaten in der digitalen sensorbasierten Straßenkarte (SK) ermittelt werden,
- nicht relevante Fahrabschnittskandidaten identifiziert und eliminiert werden,
- die Route (R) in Teilgraphen (T1) mit nur einer möglichen Fahrspur und Teilgraphen (T2) mit mehreren möglichen Fahrspuren segmentiert wird,
- optimale Fahrspuren (oF) identifiziert werden, wobei in den Teilgraphen (T1) mit nur einer möglichen Fahrspur diese Fahrspur als optimale Fahrspur (oF) identifiziert wird und in den Teilgraphen (T2) mit mehreren möglichen Fahrspuren eine der Fahrspuren als optimale Fahrspur (oF) ausgewählt wird, und
- die optimalen Fahrspuren (oF) zu der gesuchten spurgenauen Navigationsroute (NR) zusammengesetzt werden.

2. Verfahren nach Anspruch 1,
**dadurch gekennzeichnet, dass** Abschnitte der Navigationsroute (NR), für die keine fahrspurgenauen Fahrabschnittskandidaten ermittelt werden konnten, für den automatisierten Fahrbetrieb gesperrt werden.

3. Verfahren nach einem der vorhergehenden Ansprüche,
**dadurch gekennzeichnet, dass** Abschnitte der Navigationsroute (NR), für die fahrspurgenaue Fahrabschnittskandidaten ermittelt werden konnten, für den automatisierten Fahrbetrieb freigegeben werden.

4. Verfahren nach Anspruch 3,
**dadurch gekennzeichnet, dass** der hochautomatisierte oder autonome Fahrbetrieb nur auf freigegebenen Abschnitten zugelassen wird.

5. Verfahren nach einem der Ansprüche 2 bis 4,
**dadurch gekennzeichnet, dass** im hochautomatisierten oder autonomen Fahrbetrieb vor Erreichen eines gesperrten Abschnitts eine Übernahmeaufforderung an einen Fahrzeugführer des Fahrzeugs ausgegeben wird.

6. Verfahren nach einem der Ansprüche 2 bis 5,
**dadurch gekennzeichnet, dass** eine alternative spurgenaue Navigationsroute (NR) ohne gesperrte Abschnitte oder mit weniger gesperrten Abschnitten gesucht wird, wenn die gefundene spurgenaue Navigationsroute (NR) einen oder mehrere gesperrte Abschnitte enthält.

7. Verfahren nach einem der vorhergehenden Ansprüche,
**dadurch gekennzeichnet, dass** für die Teilgraphen (T2) mit mehreren möglichen Fahrspuren die optimalen Fahrspuren (oF) mittels einer Kostenfunktion identifiziert werden.

8. Verfahren nach einem der vorhergehenden Ansprüche,
**dadurch gekennzeichnet, dass** in Abhängigkeit der spurgenauen Navigationsroute (NR) eine Spurwechselempfehlung zur Durchführung eines manuellen oder automatisierten Spurwechsels zum Folgen der spurgenauen Navigationsroute (NR) erstellt wird.

## Claims

1. Method for determining a navigation route (NR) for an automated driving operation of a vehicle, wherein the navigation route (NR) for the automated, in particular highly automated or autonomous, driving operation is determined in a lane-specific manner by
- on the basis of a digital attribute-based road map (AK), creating a list of nodes that represent geographic coordinate points (KP1 to KP7) of a route (R) determined by a navigation system,
- transferring the list of nodes into a digital sensor-based road map (SK) that contains a sensor-captured environment description and describes previously recorded lane-specific driving path segments as well as a representation of the environment encountered from the perspective of cumulative sensor data from multiple different vehicles,
- determining lane-specific driving portion candidates in the digital sensor-based road map (SK), on the basis of the list of nodes,
- identifying and eliminating irrelevant driving portion candidates,
- segmenting the route (R) into subgraphs (T1) with only one possible lane and subgraphs (T2) with multiple possible lanes,
- identifying optimal lanes (oF), whereby in the subgraphs (T1) with only one possible lane, this lane is identified as the optimal lane (oF) and in the subgraphs (T2) with multiple possible lanes, one of the lanes is selected as the optimal lane (oF), and
- combining the optimal lanes (oF) to form the desired lane-specific navigation route (NR).

2. Method according to claim 1,
**characterized in that** portions of the navigation route (NR) for which no lane-specific driving portion candidates could be determined are closed to the automated driving operation.

3. Method according to either of the preceding claims,
**characterized in that** portions of the navigation route (NR) for which lane-specific driving portion candidates could be determined are approved for the automated driving operation.

4. Method according to claim 3,
**characterized in that** the highly automated or autonomous driving operation is only permitted on approved portions.

5. Method according to any of claims 2 to 4,
**characterized in that,** in the highly automated or autonomous driving operation, a takeover request is issued to a driver of the vehicle before a closed portion is reached.

6. Method according to any of claims 2 to 5,
**characterized in that** an alternative lane-specific navigation route (NR) without closed portions or with fewer closed portions is sought if the found lane-specific navigation route (NR) contains one or more closed portions.

7. Method according to any of the preceding claims,
**characterized in that,** for the subgraphs (T2) with multiple possible lanes, the optimal lanes (oF) are identified using a cost function.

8. Method according to any of the preceding claims,
**characterized in that,** depending on the lane-specific navigation route (NR), a lane change recommendation is generated for performing a manual or automated lane change to follow the lane-specific navigation route (NR).

## Revendications

1. Procédé pour la détermination d'un itinéraire de navigation (NR) pour un mode de conduite automatisé d'un véhicule, dans lequel l'itinéraire de navigation (NR) pour le mode de conduite automatisé, en particulier hautement automatisé ou autonome, est déterminé avec une voie précise, par le fait que
- sur la base d'une carte routière numérique basée sur des attributs (AK), une liste de nœuds est établie, lesquels représentent des points de coordonnées géographiques (KP1 à KP7) d'un itinéraire (R) déterminé par un système de navigation,
- la liste de nœuds est transférée dans une carte routière numérique basée sur des capteurs (SK) qui contient une description de l'environnement détectée par des capteurs et décrit des segments de trajets de circulation avec une voie de circulation précise enregistrés dans le passé ainsi qu'une représentation de l'environnement trouvé du point de vue de données de capteurs cumulées de plusieurs véhicules différents,
- à l'aide de la liste de nœuds, des sections de circulation candidates avec une voie de circulation précise sont déterminés dans la carte routière numérique basée sur des capteurs (SK),
- les sections de circulation candidates non pertinentes sont identifiées et éliminées,
- l'itinéraire (R) est segmenté en graphes partiels (T1) comportant une seule voie de circulation possible et en graphes partiels (T2) comportant plusieurs voies de circulation possibles,
- des voies de circulation optimales (oF) sont identifiées, dans lequel ladite voie de circulation est identifiée comme voie de circulation optimale (oF) dans les graphes partiels (T1) comportant une seule voie de circulation possible et l'une des voies de circulation est sélectionnée comme voie de circulation optimale (oF) dans les graphes partiels (T2) comportant plusieurs voies de circulation possibles, et
- les voies de circulation optimales (oF) sont assemblées pour former l'itinéraire de navigation (NR) avec une voie précise recherché.

2. Procédé selon la revendication 1,
**caractérisé en ce que** des sections de l'itinéraire de navigation (NR), pour lesquelles aucune section de circulation candidate avec une voie de circulation précise n'a pu être déterminée, sont bloquées pour le mode de conduite automatisé.

3. Procédé selon l'une des revendications précédentes,
**caractérisé en ce que** des sections de l'itinéraire de navigation (NR), pour lesquelles des de sections de circulation candidates avec une voie de circulation précise ont pu être déterminées, sont libérées pour le mode de conduite automatisé.

4. Procédé selon la revendication 3,
**caractérisé en ce que** le mode de conduite hautement automatisé ou autonome n'est autorisé que sur des sections libérées.

5. Procédé selon l'une des revendications 2 à 4,
**caractérisé en ce que,** dans le mode de conduite hautement automatisé ou autonome, une demande de prise en charge est émise à un conducteur de véhicule du véhicule avant d'atteindre une section bloquée.

6. Procédé selon l'une des revendications 2 à 5,
**caractérisé en ce qu'un** itinéraire de navigation (NR) avec une voie précise alternatif sans sections bloquées ou avec moins de sections bloquées est recherché si l'itinéraire de navigation (NR) avec une voie précise trouvé contient une ou plusieurs sections bloquées.

7. Procédé selon l'une des revendications précédentes,
**caractérisé en ce que,** pour les graphes partiels (T2) comportant plusieurs voies de circulation possibles, les voies de circulation optimales (oF) sont identifiées au moyen d'une fonction de coût.

8. Procédé selon l'une des revendications précédentes,
**caractérisé en ce que,** en fonction de l'itinéraire de navigation (NR) avec une voie précise, une recommandation de changement de voie est établie pour effectuer un changement de voie manuel ou automatisé pour suivre l'itinéraire de navigation (NR) avec une voie précise.
